# EUROPEAN PATENT SPECIFICATION

(11) **EP 2 079 805 B1**
(45) Date of publication and mention of the grant of the patent: **01.08.2012**
(21) Application number: 07821292.5
(22) Date of filing: 15.10.2007
(51) Int. Cl.: C09B 29/52, C08J 3/20, C08K 5/23

(54) **MONOAZO COLORANTS FOR MASS-COLOURING OF POLYMERS**
MONOAZOFARBMITTEL ZUR EINFÄRBUNG VON POLYMEREN IN DER MASSE
COLORANTS MONOAZO POUR COLORATION EN MASSE DE POLYMÈRES

(30) Priority: 25.10.2006 EP 06122940; 08.12.2006 EP 06125714
(43) Date of publication of application: 22.07.2009
(73) Proprietor: BASF SE, 67056 Ludwigshafen (DE)
(72) Inventor: RUCH, Thomas, 2800 Delémont (CH); LUTERBACHER, Ursula, 4153 Reinach (CH)
(86) International application number: PCT/EP2007/060925
(87) International publication number: WO 2008/049744

(56) References cited:
- EP-A- 0 046 729
- DE-A1- 1 769 250
- DE-A1- 2 351 294
- FR-A- 1 527 728
- GB-A- 727 045
- US-A- 4 340 430

## Description

Colour Index Pigment Yellow 191:2 is a pigment which has excellent coloristics but which has to be prepared from basic chemicals in a number of steps. There is therefore a need for a pigment having similarly good coloristics that is simple to prepare and exhibits good application-related properties in the mass-colouring of polymers.

JP S34/000 875 discloses compounds which can be used as antagonists for the metabolism of nucleic acids and medicaments against cancer (or as starting materials therefor), including the compound of formula

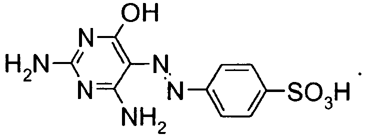

DE-OS 1 445982 discloses a process for the preparation of 4-amino-5-arylazo-pyrimidine derivatives, in Example 8 having the formula

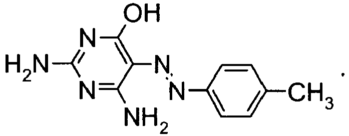

DE-OS 1 769 250 discloses a process for the preparation of water-soluble azopyrimidine dyes of the general formula 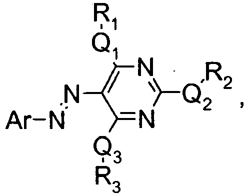 and in Example 104 a dye of formula 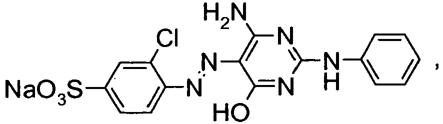 which dyes wool and polyamide fibres in fast pure yellow shades.

DE-OS 23 51294 discloses azo pigments of the preferred general formula 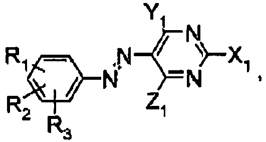 wherein X₁ may be *inter alia* amino and Y₁ and Z₁ are OH or
NH₂, but X₁, Y₁ and Z₁ are not all simultaneously OH. The definitions of R₁, R₂ and R₃ include neither SO₃H groups nor their salts.

US 4,340,430 discloses triaminopyrimidine azo pigments, and in Examples 21/22 those of formula

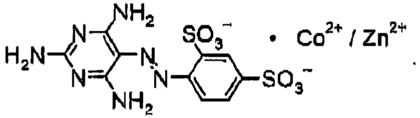

PL 162 231 B2 discloses azo dyes for dyeing wool or polyamide, and in Example 2 that of formula

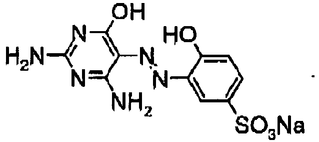

EP 0 591 105 A2 discloses bisazo compounds which are prepared in a two-step process in overall unsatisfactory yields, and in Example 41 the compound of formula

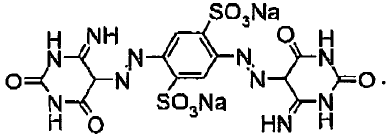

DE-OS 44 07 802 discloses azo compounds and intermediates of the general formula

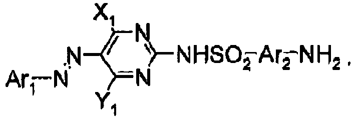

EP 0046729 A2 discloses a process for mass-coloration of polyamide fibers with azo compounds of the general formula 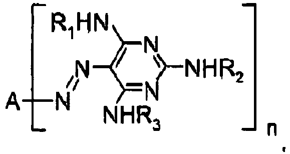 wherein A is a diazo- or tetraazo-structural element, R₁, R₂
and R₃ are H, alkyl, cycloalkyl, phenylalkyl or aryl and n is 1 or 2.

It has now been found, surprisingly, that good colorants for mass-colouring polymers can be prepared in a very simple way.

The invention accordingly relates to a process for mass-colouring high molecular weight material, in which process a compound of formula 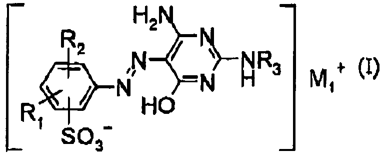 or a tautomer thereof, wherein
M₁ is H, ½ M₂, ⅓ M₃ or NR₄R₅R₆R₇, preferably H, ½ M₂ or NR₄R₅R₆R₇, especially H,
M₂ is an alkaline earth or transition metal in oxidation state II or an oxo-metal in oxidation state IV,
M₃ is Al (III), a transition metal in oxidation state III or an oxo-metal in oxidation state V,
R₁ is a non-ionic substituent having a para Hammett constant σₚ of from -0.3 to 0.6,
R₂ is H or, independently of R₁, a further non-ionic substituent having a para Hammett constant σₚ of from -0.3 to 0.6,
R₃ is H, and
R₄, R₅, R₆ and R₇ are each independently of the others H or phenyl, benzyl or C₁-C₆alkyl, which are unsubstituted or may be substituted by hydroxy or by halogen and in the case of C₃-C₆alkyl is uninterrupted or interrupted by O,
is incorporated into the high molecular weight material before or during shaping,

M₂ is preferably Ca, Co, Cu, Fe, Mg, Mn, Sr, TiO, Zn or ZrO. M₃ is preferably Al, Ce, Co, Cr, Fe or VO. The fractions ½ and % mean that a metal atom M₂ or M₃ forms a salt with two or with three sulfonate molecules, respectively.

R₁ is preferably a non-ionic substituent having a para Hammett constant σₚ of from from -0.3 to 0.3, R₂ is preferably H or, independently of R₁, a further non-ionic substituent having a para Hammett constant σₚ of from -0.3 to 0.3, but R₂ is very especially H.

Non-ionic substituents having a para Hammett constant σₚ of from -0.3 to 0.6 are, for example, OCH₃ (σₚ=-0.27), tert-C₄H₉ (σₚ=-0.20), CH₃ (σₚ=-0.17), NHCOCH₃ (σₚ=-0.01), C₆H₅ (σₚ=-0.01), F (σₚ=0.06), I (σₚ=0.18), Cl (σₚ=0.22), Br (σₚ=0.23), CO₂C₂H₅ (σₚ=0.45) and CF₃ (σₚ=0.54).

The Hammett constants of common substituents can be found in tabular form in, for example, Römpp's encyclopaedia (www.roempp.com). The Hammett constants of further substituents can be determined in accordance with Chem. Rev. 17, 125-136 [1935]. Ionic substituents, such as COO⁻ or SO₃⁻, and strongly polarising substituents, such as N(CH₃)₃ (σₚ=-0.83), NH₂ (σₚ=-0.66), OH (σₚ=-0.37), CN (σₚ=0.66) or NO₂ (σₚ=0.78), however, often result undesirably in less advantageous properties.

The compounds of formula (I) can also be in the form of mixtures or solid solutions with other salts (for example with alkali metal salts). Depending upon the reaction and drying parameters it is also possible for water of crystallisation to be present.

C₁-C₆Alkyl is, for example, methyl, ethyl, n-propyl, isopropyl, n-butyl, sec-butyl, isobutyl, tert-butyl, n-pentyl, 2-pentyl, 3-pentyl, 2,2-dimethylpropyl or n-hexyl. Halogen is chlorine, bromine, fluorine or iodine, preferably fluorine or chlorine, especially fluorine on alkyl (for example trifluoromethyl, α,α,α-trifluoroethyl or perfluorinated alkyl groups such as heptafluoropropyl) and chlorine on phenyl.

It is especially preferred for R₁ to be C₁-C₆alkyl, OC₁-C₆alkyl, NHCOC₁-C₆alkyl, phenyl or Cl, more especially C₁-C₄alkyl, for example tert-butyl or very especially methyl, and for R₂ and R₃ to be hydrogen. The sulfo group SO₃M is preferably in the position ortho to the azo bridge.

Especially, many of the particularly interesting compounds are novel. The invention accordingly relates also to a compound of formula 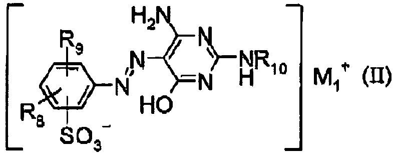 or a tautomer thereof, wherein
M₁ is H, ½ M₂, ⅓ M₃ or NR₄R₅R₆R₇, preferably H, ½ M₂ or NR₄R₅R₆R4₇, especially H,
R₈ is a non-ionic substituent having a para Hammett constant σₚ of from -0.3 to 0.6, preferably from -0.3 to 0.3,
R₉ is H or, independently of R₈, a further non-ionic substituent having a para Hammett constant σₚ of from -0.3 to 0.6, preferably from -0.3 to 0.3,
R₁₀ is H, and
R₄, R₅, R₆ and R₇ are each independently of the others H or phenyl, benzyl or C₁-C₆alkyl, which are unsubstituted or may be substituted by hydroxy or by halogen and in the case of C₃-C₆alkyl is uninterrupted or interrupted by O.

Preference is given to the compounds of formulae 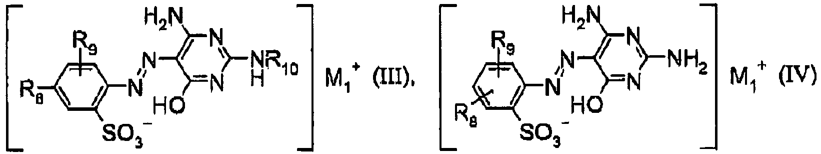 and
especially 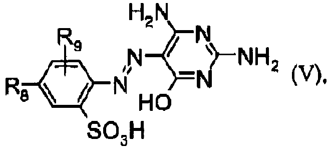 which can also be present as tautomers, for example as sulfobetaines (when M₁⁺ is H).

In general, sulfobetaines are advantageously distinguished by particularly high tinctorial strength and a slightly more reddish to orange colour shade with good fastness properties.

In formulae (II), (III) and (IV), the same other preferences apply to R₈, R₉ and R₁₀ as to R₁, R₂ and R₃, respectively, in formula (I).

Special preference is given to compounds of formula

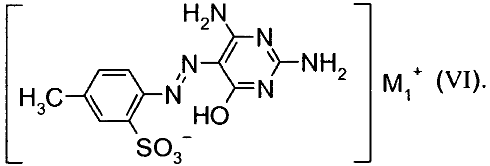

The compounds of formulae (I), (II), (III), (IV), (V) and (VI) yield surprisingly high-temperature-stable, light-fast and tinctorially strong colorations when used for the mass-colouring of high molecular weight materials, especially plastics and plastics fibres.

The colorants according to the invention can be prepared in accordance with processes known *per se* or analogously thereto and isolated in pure form and dried, whereafter they are readily dispersible in plastics, surface coatings and printing inks, for example using a ball mill or bead mill. They can also be used in the form of wet presscakes directly for the production of pigment dispersions. To improve the application-related properties, customary additives can optionally be added in customary concentrations to the colorants according to the invention before or during precipitation or isolation.

The invention accordingly relates also to a mass-coloured high molecular weight material comprising from 0.01 to 70 % by weight, based on the total coloured high molecular weight material, of a compound of formula (I), (II), (III), (IV), (V) or (VI) which is present in the form of solid particles distributed in the high molecular weight material or which, in dissolved form, homogeneously penetrates the high molecular weight material.

The invention relates also to the use of a compound of formula (I), (II), (III), (IV), (V) or (VI) in the mass-colouring of a high molecular weight material.

The high molecular weight material is preferably a polyolefin, such as high, medium or low density polyethylene (HDPE, HDPE-HMW, HDPE-UHMW, LDPE, LLDPE, VLDPE, ULDPE), polypropylene or polyisobutylene, an astonishing degree of high-temperature stability being achieved, which is also of interest even for applications in polyamide.

Although the colorants according to the invention are especially suitable for the mass-colouring of polyolefins, more especially polyethylene, they can also be used advantageously for the mass-colouring of other polymers.

The high molecular weight organic material to be coloured in accordance with the invention can be of natural or synthetic origin and usually has a molecular weight in the range of from 10³ to 10⁸ g/mol. It may be, for example, a natural resin or a drying oil, rubber or casein, or a modified natural substance, such as chlorinated rubber, an oil-modified alkyd resin, viscose, or a cellulose ether or ester, such as cellulose acetate, cellulose propionate, cellulose acetobutyrate or nitrocellulose, but is especially a completely synthetic organic polymer (either thermosetting plastics or thermoplastics), as are obtained by polymerisation, polycondensation or polyaddition, for example polycarbonate, polyester, such as polyethylene terephthalate or polybutylene terephthalate, polyolefins, such as polyethylene, polypropylene or polyisobutylene, substituted polyolefins, such as polymerisation products of vinyl chloride, vinyl acetate, styrene, acrylonitrile or acrylic acid and/or methacrylic acid esters, or butadiene, polystyrene or polymethyl methacrylate, and also copolymerisation products of the said monomers, especially acrylonitrile/butadiene/styrene (ABS), styrene/acrylonitrile (SAN) or EVA.

From the range of polyaddition resins and polycondensation resins there may be mentioned condensation products of formaldehyde with phenols, so-called phenoplasts, and condensation products of formaldehyde with urea, thiourea and melamine, so-called aminoplasts, the polyesters used as surface-coating resins, either saturated, such as alkyd resins, or unsaturated, such as maleic resins, also linear polyesters and polyamides or silicones.

Furthermore, the high molecular weight organic material can be a binder for surface coatings or printing inks, such as boiled linseed oil, nitrocellulose, alkyd resins, melamine resins, urea-formaldehyde resins, acrylic resins or other hardenable or polymerisable precursors.

The said high molecular weight compounds can be used alone or in mixtures, in the form of plastic compositions, solutions or melts, which can optionally be spun to form fibres. It may be a ready-to-use composition or an article formed therefrom, or a masterbatch, for example in the form of granules. Optionally, it is also possible to use for colouring high molecular weight organic materials in accordance with the invention customary additives, which may be contained both in the uncoloured organic material and in the colorant or can be added during incorporation.

Examples of such additives are stabilisers, such as anti-oxidants, UV stabilisers or light stabilisers, surfactants, wetting agents, plasticisers or texture improvers. When texture improvers are desired, they are optionally added preferably to the colorants according to the invention as early as during synthesis or during after-treatment.

Texture improvers are, for example, fatty acids having at least 12 carbon atoms, such as, especially, stearic or behenic acid, stearic or behenic acid amide, salts of stearic or behenic acid, such as magnesium, zinc or aluminium stearate or behenate, also quaternary ammonium compounds, such as, especially, tri(C₁-C₄)alkylbenzylammonium salts, such as trimethyl-, triethyl-, tri-n-propyl-, tri-isopropyl-, tri-n-butyl-, tri-sec-butyl- and tri-tert-butyl-benzylammonium salts, and also plasticisers, such as epoxidised soybean oil, waxes, such as polyethylene wax, resin acids, such as abietic acid, colophonium soap, hydrogenated or dimerised colophonium, (C₁₂-C₁₈)-paraffindisulfonic acid, alkylphenols and alcohols, such as stearyl alcohol, also lauryl amine or stearyl amine, and/or aliphatic 1,2-diols, such as 1,2-dodecanediol.

Preferred texture improvers are lauryl amine and stearyl amine, aliphatic 1,2-diols, stearic acid and its amides, salts and esters, epoxidised soybean oil, waxes and resin acids.

Such additives can be added, for example, advantageously in amounts of from 0.05 to 25 % by weight, preferably from 0.5 to 15 % by weight, based on the composition according to the invention, before, during or after the preparation thereof.

The pigmenting of the high molecular weight organic substances with the colorants according to the invention is carried out, for example, by admixing such a colorant, optionally in the form of a masterbatch, with the substrates using roll mills or mixing or grinding apparatus. The coloured material is then generally brought into the desired final form by methods known *per se*, such as by calendering, compression moulding, extrusion, coating, spraying, casting, printing or by injection moulding. It is often desirable, in order to produce non-rigid mouldings or to reduce their brittleness, to incorporate so-called plasticisers into the high molecular weight compounds prior to shaping. As plasticisers there may be used, for example, esters of phosphoric acid, phthalic acid or sebacic acid. In the process according to the invention, the plasticisers may be incorporated into the polymers before or after incorporation of the pigment dye. It is also possible, in order to achieve different colour shades, to add to the high molecular weight organic materials, in addition to the pigment compositions, also fillers or other colour-imparting constituents, such as white, coloured or black pigments as well as effect pigments, in the respective desired amount.

The admixing of the colorant can also be effected immediately prior to the actual processing step, for example by continuously feeding a pulverulent colorant according to the invention and, at the same time, a granulated high molecular weight organic material, and optionally also additional ingredients, such as, for example, additives, directly into the intake zone of an extruder, where mixing takes place immediately before processing. Generally, however, it is preferable to mix the colorant into the high molecular weight organic material beforehand, since more uniform results can be achieved.

For colouring surface coatings and printing inks, the high molecular weight organic materials and the colorants according to the invention are finely dispersed or dissolved, optionally together with additives, such as stabilisers, dispersants, gloss improvers, fillers, other pigments, siccatives or plasticisers, generally in an organic and/or aqueous solvent or solvent mixture. It is possible to use a procedure in which the individual components are dispersed or dissolved separately or in which a plurality thereof are dispersed or dissolved together and only then all of the components combined.

Surface coatings are applied, for example, by dipping, knife application, film drawing, brush application or spraying, the coatings according to the invention being formed after drying and hardening, advantageously thermally or by irradiation. Further methods of application that result in coatings are powder coating and coil coating methods, all the details of which are known *per se* to the person skilled in the art.

When the high molecular weight material to be coloured is a surface coating, it may be a customary coating or a speciality coating, for example an automotive finish.

Printing inks of generally known compositions are applied by customary methods, for example by letterpress printing (flexographic printing), planographic printing (offset printing, lithographic printing), intaglio printing (rotogravure, steel engraving), screen printing or ink-jet printing (piezo or vapour bubble methods), for example to paper, cardboard, metal, wood, leather, plastics or textiles, for publications, illustrations, packaging, banknotes, logistics documents or decoration. Further ink compositions can be used in ballpoint pens and felt-tip pens as well as in ink pads, ink ribbons and ink cartridges.

It is advisable for the person skilled in the art routinely to try out any plastics, surface-coating or printing ink compositions known to him, for example those which are the subject of published patent applications or those which are commercially available, even when he does not have precise knowledge of their compositions.

In addition to the mass-colouring of high molecular weight organic materials in the form of plastics, surface coatings and printing inks, the colorants according to the invention are also suitable, for example, for the production of solid toners, wax transfer ribbons or colour filters.

The following Examples illustrate the invention but do not limit the scope thereof (unless otherwise indicated, "%" always denotes % by weight):

Example 1: 7.56 g of 4-methylaniline-2-sulfonic acid (99 %) are stirred in 160 ml of water and dissolved with 4 ml of 30 % sodium hydroxide solution. 14 ml of 37 % hydrochloric acid (technical grade) are then added. The mixture is cooled to 0-5°C and 10 ml of aqueous 4N sodium nitrite solution are added dropwise. After 2 hours, 4 ml of aqueous 1 N sulfamic acid solution are added to the diazonium suspension.

5.55 g of 2,4-diamino-6-hydroxypyrimidine are dissolved in 120 ml of water containing 30 % sodium hydroxide solution, then added dropwise to the cold diazonium salt suspension within a period of 30 minutes. The pH is adjusted to pH 5.5 with 30 % sodium hydroxide solution. The reaction mixture is stirred for a further 18 hours at 23°C. The suspension is then divided into two samples each of about 300 ml.

1) One portion of the suspension is heated to 60°C and stirred for a further 1 hour. The yellow suspension is then filtered through a hard filter, washed with 250 ml of water and dried at 90°C/5·10³ Pa, yielding 6.2 g of a product of formula 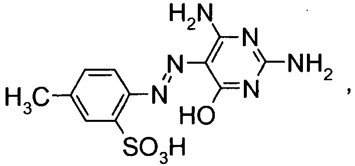 which, when used for mass-colouring PVC (calender) and HDPE (injection-moulding), yields a thermostable yellow coloration.

| Analysis: | | C | H | N | S | Na |
|---|---|---|---|---|---|---|
| | [%] | 40.0 | 3.9 | 26.1 | 9.5 | < 1 ppm |
| | calc.: | 40.7 | 3.7 | 25.9 | 9.9 | - |

2) The second portion of the suspension is treated with 1 g of sorbitan monolaurate in 10 ml of water. The mixture is heated to 60°C and stirred for a further 1 hour. The yellow suspension is then filtered through a hard filter and the residue is washed with 250 ml of water and dried in a vacuum cabinet at 90°C/5·10³ Pa, yielding 7.4 g of a product which, when used for mass-colouring PVC (calender) and HDPE (injection-moulding), yields thermostable yellow colorations.

| Analysis: | | C | H | N | S | Na |
|---|---|---|---|---|---|---|
| | [%] | 43.3 | 4.5 | 23.3 | 8.4 | < 1 ppm |

Example 2: 22.7 g of 4-methylaniline-2-sulfonic acid (99 %) are stirred in 450 ml of water. 30 ml of 37 % hydrochloric acid (technical grade) are then added. The mixture is cooled to 0-5°C and 40 ml of aqueous 4N sodium nitrite solution are added dropwise. After 1.5 hours, 6 ml of aqueous 1 N sulfamic acid solution are added to the diazonium salt suspension.

16.6 g of 2,4-diamino-6-hydroxypyrimidine are dissolved in 360 ml of water containing 30 % sodium hydroxide solution, then precipitated with acetic acid and cooled to 0-5°C. The cold diazonium salt suspension is then added dropwise thereto within a period of 30 minutes, while the pH is maintained at 5.5 by means of 30 % sodium hydroxide solution. The orange suspension is stirred at 23°C for a further 18 hours, then heated to 85°C and stirred for 2 hours, finally filtered through a hard filter, washed with 1200 ml of water and dried at 90°C/5·10³ Pa, yielding 37.7 g (96.3 % of theory) of a product which, when used for mass-colouring PVC (calender) and HDPE (injection-moulding), yields thermostable yellow colorations.

| Analysis: | | C | H | N | S | Na |
|---|---|---|---|---|---|---|
| | [%] | 40.4 | 3.9 | 26.2 | 9.6 | <1 ppm |
| | calc.: | 40.7 | 3.7 | 25.9 | 9.9 | - |

By varying the pH value it is also possible to obtain pigment mixtures or solid solutions which in some cases contain alkali metal ions as M₁⁺ (e.g. Na⁺, Li , K⁺).

Examples 3 - 5: The procedure is carried out analogously to Example 2, but the sulfonic acid is neutralised with calcium, strontium or ammonium acetate when coupling is complete, yielding compounds having the following structures which, when used for mass-colouring PVC (calender) and HDPE (injection-moulding), yield thermostable yellow colorations:

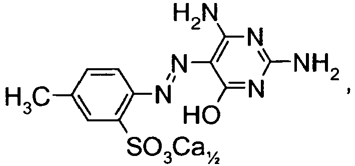

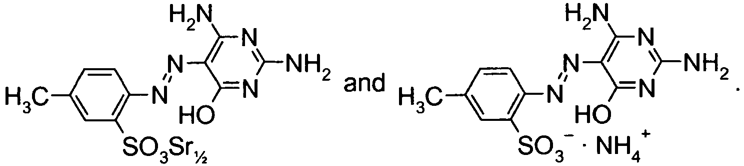

Example 6: 0.2 % by weight of the product according to Example 1 or 2 is incorporated into polyamide 6 (Ultramid^{®} B3K, BASF) in an extruder, after which test plates (for example 30 × 50 × 2 mm) are produced by injection-moulding at 240°C. Homogeneous colorations having good light stability are obtained.

Examples 7 - 10: The procedure is carried out analogously to Examples 2 - 5, but instead of 4-methylaniline-2-sulfonic acid there is used an equivalent amount of 2-methylaniline-4-sulfonic acid. The results are very similar to those of Examples 2 - 5.

Examples 11 - 14: The procedure is carried out analogously to Examples 2 - 5, but instead of 4-methylaniline-2-sulfonic acid there is used an equivalent amount of aniline-4-sulfonic acid. The results are very similar to those of Examples 2-5, but with a slightly more green-tinged colour shade.

Examples 15-16: The procedure is carried out analogously to Examples 2-3, but instead of 4-methylaniline-2-sulfonic acid there is used an equivalent amount of aniline-3-sulfonic acid, there additionally being added 20 % by weight (based on the amount of pigment theoretically obtainable) of a colophonium resin to improve the texture.

Examples 17-20: The procedure is carried out analogously to Examples 2-5, but instead of 4-methylaniline-2-sulfonic acid there is used an equivalent amount of 2-amino-5-chloro-4-ethylbenzenesulfonic acid:

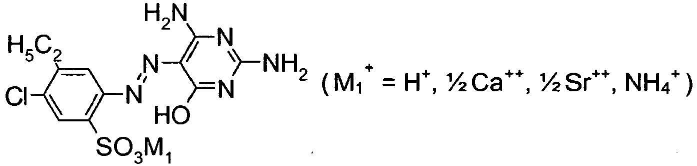

The results are very similar to those of Examples 2-5.

Examples 21 - 24: The procedure is carried out analogously to Examples 2-5, but instead of 4-methylaniline-2-sulfonic acid there is used an equivalent amount of 2-amino-5-methoxybenzenesulfonic acid:

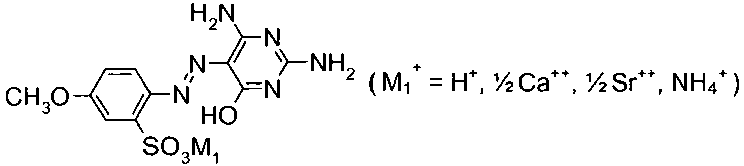

The results are very similar to those of Examples 2-5, but with a more red-tinged to orange colour.

Examples 25 - 28: The procedure is carried out analogously to Examples 2 - 5, but instead of 4-methylaniline-2-sulfonic acid there is used an equivalent amount of 5-acetamino-2-aminobenzenesulfonic acid:

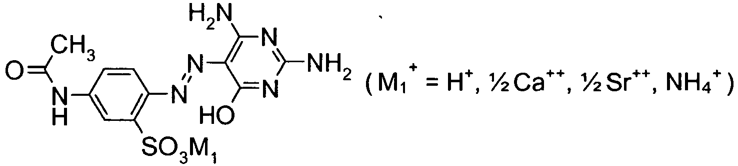

The results are similar to those of Examples 2-5, but with a more red-tinged to orange colour.

Examples 29 - 32: The procedure is carried out analogously to Examples 2-5, but instead of 4-methylaniline-2-sulfonic acid there is used an equivalent amount of 4-acetamino-2-amino-5-(2'-sulfophenylazo)-benzenesulfonic acid:

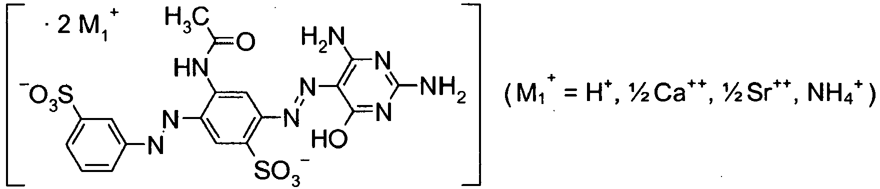

The results are similar to those of Examples 2-5, but with a more red-tinged to orange colour.

Examples 33-36: The procedure is carried out analogously to Examples 2-5, but instead of 2,4-diamino-6-hydroxypyrimidine there is used an equivalent amount of 4-amino-2-dimethylamino-6-hydroxypyrimidine:

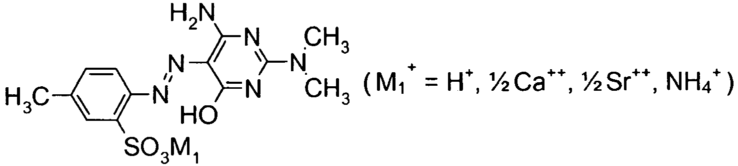

The results are similar to those of Examples 2-5, but with a more red-tinged to orange colour.

Examples 37 - 66: The pigments obtained in accordance with Examples 7 - 36 are used for mass-colouring PVC on a calender, yielding homogeneous colorations having good light stability.

Examples 67 - 96: The pigments obtained in accordance with Examples 7 - 36 are used for mass-colouring HDPE in an injection-moulding process, yielding homogeneous colorations having good light stability.

Examples 97 -122: 0.2 % by weight of the pigments obtained in accordance with Examples 7 - 32 is incorporated into polyamide 6 in accordance with Example 6, after which test plates (for example 30 × 50 × 2 mm) are produced by injection-moulding at 240°C. Homogeneous colorations having good light stability are obtained.

## Claims

1. A process for mass-colouring high molecular weight material, in which process a compound of formula 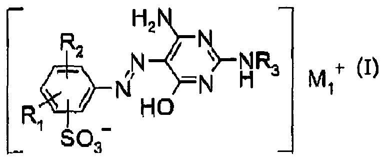 or a tautomer thereof,
wherein
M₁ is H, ½ M₂, ⅓ M₃ or NR₄R₅R₆R₇, preferably H, ½ M₂ or NR₄R₅R₆R₇, especially H, M₂ is an alkaline earth or transition metal in oxidation state II or an oxo-metal in oxidation state IV,
M₃ is Al (III), a transition metal in oxidation state III or an oxo-metal in oxidation state V,
R₁ is a non-ionic substituent having a para Hammett constant σₚ of from -0.3 to 0.6, R₂ is H or, independently of R₁, a further non-ionic substituent having a para Hammett constant σₚ of from -0.3 to 0.6,
R₃ is H, and
R₄, R₅, R₆ and R₇ are each independently of the others H or phenyl, benzyl or C₁-C₆alkyl, which are unsubstituted or may be substituted by hydroxy or by halogen and in the case of C₃-C₆alkyl is uninterrupted or interrupted by O,
is incorporated into the high molecular weight material before or during shaping.

2. A process according to claim 1, wherein M₂ is Ca, Co, Cu, Fe, Mg, Mn, Sr, TiO, Zn or ZrO, or M₃ is Al, Ce, Co, Cr, Fe or VO.

3. A process according to claim 1 or 2, wherein in formula (I) SO₃M is in the position ortho to the azo bridge.

4. A compound of formula 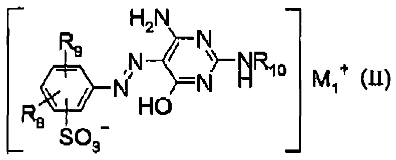 or a tautomer thereof, wherein
M₁ is H, ½ M₂, ⅓ M₃ or NR₄R₅R₆R₇, preferably H, ½ M₂ or NR₄R₅R₆R₇, especially H, R₈ is a non-ionic substituent having a para Hammett constant σₚ of from -0.3 to 0.6, preferably from -0.3 to 0.3,
R₉ is H or, independently of R₈, a further non-ionic substituent having a para Hammett constant σₚ of from -0.3 to 0.6, preferably from -0.3 to 0.3,
R₁₀ is H, and
R₄, R₅, R₈ and R₇ are each Independently of the others H or phenyl, benzyl or C₁-C₆alkyl, which are unsubstituted or may be substituted by hydroxy or by halogen and In the case of C₃-C₆alkyl is uninterrupted or interrupted by O.

5. A compound according to claim 4 of formula 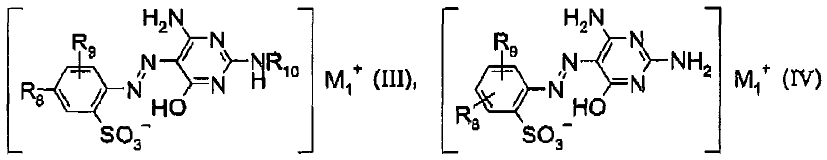 or 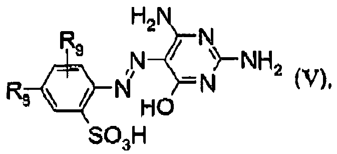 or a tautomer thereof.

6. A compound according to claim 5 of formula

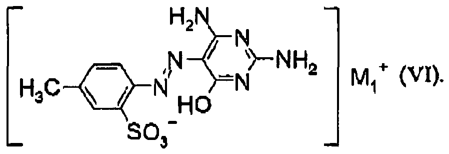

7. A mixture or solid solution comprising a compound according to claim 4 and a compound of formula 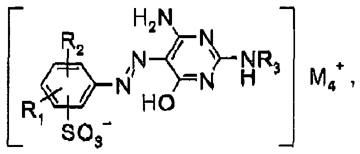 wherein M₄⁺ is Na⁺, Li⁺ or K⁺ and R₁, R₂ and R₃ are as defined according to claim 1.

8. A mass-coloured high molecular weight material comprising from 0.01 to 70 % by weight, based on the total coloured high molecular weight material, of a compound of formula (I), (II), (III), (IV), (V) or (VI) according to any one of claims 1 to 6, or a mixture or solid solution according to claim 7, which is present in the form of solid particles distributed in the high molecular weight material or which, in dissolved form, homogeneously penetrates the high molecular weight material.

9. A mass-coloured high molecular weight material according to claim 8 wherein the high molecular weight material is a polyolefin.

10. Use of a compound of formula (I), (II), (III), (IV), (V) or (VI) according to any one of claims 1 to 6, or a mixture or solid solution according to claim 7, in the mass-colouring of a high molecular weight material.

## Patentansprüche

1. Verfahren zum Färben eines hochmolekularen Materials in der Masse, bei dem man vor oder während der Formgebung in das hochmolekulare Material eine Verbindung der Formel 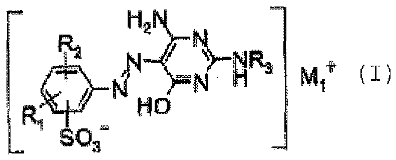 oder ein Tautomer davon einarbeitet, worin
M₁ für H, ½ M₂, 1/3 M₃ oder NR₄R₅R₆R₇, vorzugsweise H, ½ M₂, oder NR₄R₅R₆R₇, insbesondere H, steht,
M₂ für ein Erdalkali- oder Übergangsmetall in der Oxidationsstufe II oder ein Oxometall in der Oxidationsstufe IV steht,
M₃ für Al(III), ein Übergangsmetall in der Oxidationsstufe III oder ein Oxometall in der Oxidationsstufe V steht,
R₁ für einen nichtionischen Substituenten mit einer para-Hammett-Konstante σₚ von -0,3 bis 0,6 steht,
R₂ für H oder unabhängig von R₁ für einen weiteren nichtionischen Substituenten mit einer para-Hammett-Konstante σₚ von -0,3 bis 0,6 steht,
R₃ für H steht und
R₄, R₅, R₆ und R₇ jeweils unabhängig voneinander für H oder Phenyl, Benzyl oder C₁-C₆-Alkyl, die gegebenenfalls durch Hydroxy oder Halogen substituiert sein können und im Fall von C₃-C₆-Alkyl gegebenenfalls durch O unterbrochen sind, stehen.

2. Verfahren nach Anspruch 1, bei dem M₂ für Ca, Co, Cu, Fe, Mg, Mn, Sr, TiO, Zn oder ZrO steht oder M₃ für Al, Ce, Co, Cr, Fe oder VO steht.

3. Verfahren nach Anspruch 1 oder 2, bei dem in Formel (I) SO₃M in ortho-Position zur Azobrücke steht.

4. Verbindung der Formel 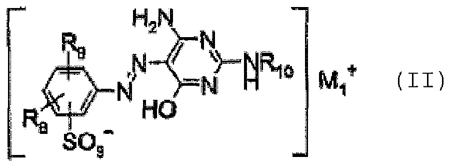 oder ein Tautomer davon, worin
M₁ für H, ½ M₂, 1/3 M₃ oder NR₄R₅R₆R₇, vorzugsweise H, ½ M₂ oder NR₄R₅R₆R₇, insbesondere H, steht, R₈ für einen nichtionischen Substituenten mit einer para-Hammett-Konstante σₚ von -0,3 bis 0,6, vorzugsweise von -0,3 bis 0,3, steht,
R₉ für H oder unabhängig von R₈ für einen weiteren nichtionischen Substituenten mit einer para-Hammett-Konstante σₚ von -0,3 bis 0,6, vorzugsweise von -0,3 bis 0,3, steht,
R₁₀ für H steht und
R₄, R₅, R₆ und R₇ jeweils unabhängig voneinander für H oder Phenyl, Benzyl oder C₁-C₆-Alkyl, die gegebenenfalls durch Hydroxy oder Halogen substituiert sein können und im Fall von C₃-C₆-Alkyl gegebenenfalls durch O unterbrochen sind, stehen.

5. Verbindung nach Anspruch 4 der Formel 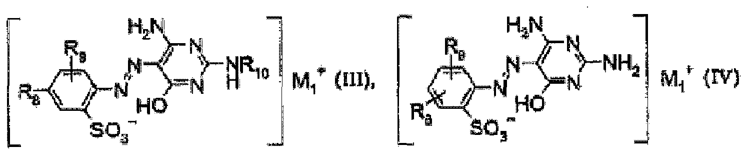 oder 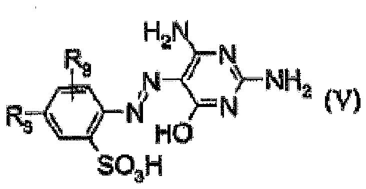 oder ein Tautomer davon.

6. Verbindung nach Anspruch 5 der Formel

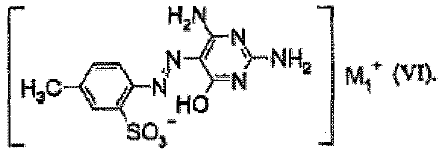

7. Mischung oder feste Lösung, umfassend eine Verbindung nach Anspruch 4 und eine Verbindung der Formel 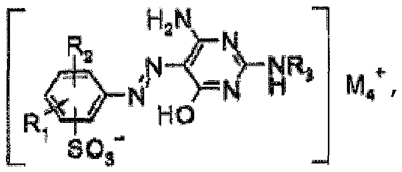 worin M₄⁺ für Na⁺, Li⁺ oder K⁺ steht und R₁, R₂ und R₃ die in Anspruch 1 angegebene Bedeutung besitzen.

8. In der Masse gefärbtes hochmolekulares Material, umfassend 0,01 bis 70 Gew.-%, bezogen auf das gesamte gefärbte hochmolekulare Material, einer Verbindung der Formel (I), (II), (III), (IV), (V) oder (VI) nach einem der Ansprüche 1 bis 6 oder einer Mischung oder festen Lösung nach Anspruch 7, die in Form von festen Teilchen in dem hochmolekularen Material verteilt ist oder in gelöster Form das hochmolekulare Material homogen durchdringt.

9. In der Masse gefärbtes hochmolekulares Material nach Anspruch 8, wobei es sich bei dem hochmolekularen Material um ein Polyolefin handelt.

10. Verwendung einer Verbindung der Formel (I), (II), (III), (IV), (V) oder (VI) nach einem der Ansprüche 1 bis 6 oder einer Mischung oder festen Lösung nach Anspruch 7 beim Färben eines hochmolekularen Materials in der Masse.

## Revendications

1. Procédé de coloration dans la masse d'une matière de haut poids moléculaire, procédé dans lequel un composé de formule 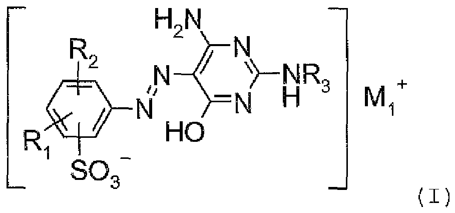 ou un tautomère de celui-ci,
dans laquelle
M₁ est H, 1/2 M₂, 1/3 M₃ ou NR₁R₅R₆R₇, de préférence H, 1/2 M₂ ou NR₄R₅R₆R₇, notamment H,
M₂ est un métal alcalino-terreux ou de transition à l'état d'oxydation II ou un oxo-métal à l'état d'oxydation IV,
M₃ est Al (III), un métal de transition à l'état d'oxydation III ou un oxo-métal à l'état d'oxydation V, R₁ est un substituant non ionique ayant une constante para de Hammett σₚ allant de -0,3 à 0,6,
R₂ est H ou, indépendamment de R₁, un autre substituant non ionique ayant une constante para de Hammett σₚ allant de -0,3 à 0,6,
R₃ est H, et
R₄, R₅, R₆ et R₇ sont chacun, indépendamment les uns des autres, H ou phényle, benzyle ou C₁-C₆alkyle, qui sont non substitués ou peuvent être substitués par hydroxy ou par halogène et, dans le cas de C₃-C₆alkyle, est non interrompu ou interrompu par O,
est incorporé dans la matière de haut poids moléculaire avant ou pendant la mise en forme.

2. Procédé selon la revendication 1, dans lequel M₂ est Ca, Co, Cu, Fe, Mg, Mn, Sr, TiO, Zn ou ZrO, ou M₃ est Al, Ce, Co, Cr, Fe ou VO.

3. Procédé selon la revendication 1 ou 2, dans lequel, dans la formule (I), SO₃M est en position ortho par rapport au pont azoïque.

4. Composé de formule 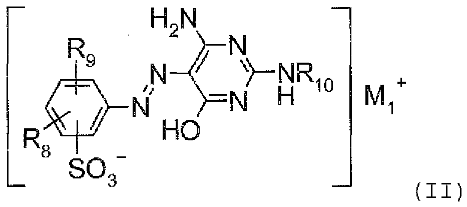 ou un tautomère de celui-ci, dans laquelle M₁ est H, 1/2 M₂, 1/3 M₃ ou NR₄R₅R₆R₇, de préférence H, 1/2 M₂ ou NR₄R₅R₆R₇, notamment H,
R₈ est un substituant non ionique ayant une constante para de Hammett σₚ allant de -0,3 à 0,6, de préférence de -0,3 à 0,3,
R₉ est H ou, indépendamment de R₈, un autre substituant non ionique ayant une constante para de Hammett σₚ allant de -0,3 à 0,6, de préférence de -0,3 à 0,3,
R₁₀ est H, et
R₄, R₅, R₆ et R₇ sont chacun, indépendamment les uns des autres, H ou phényle, benzyle ou C₁-C₆alkyle, qui sont non substitués ou peuvent être substitués par hydroxy ou par halogène et, dans le cas de C₃-C₆alkyle, est non interrompu ou interrompu par O.

5. Composé selon la revendication 4, de formule 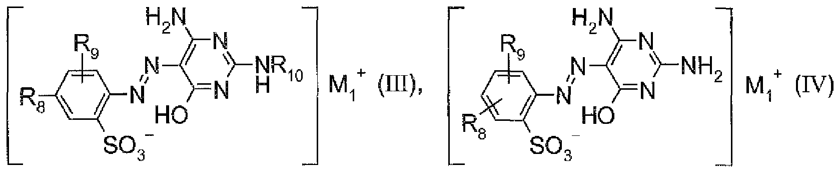 ou 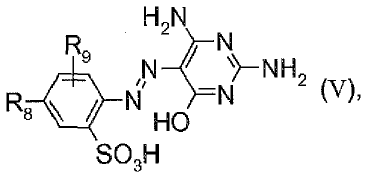 ou un tautomère de celui-ci.

6. Composé selon la revendication 5, de formule

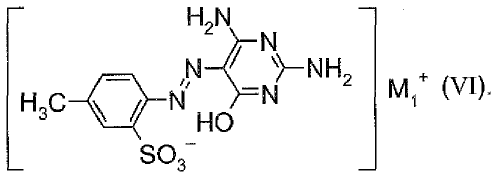

7. Mélange ou solution solide comprenant un composé selon la revendication 4 et un composé de formule 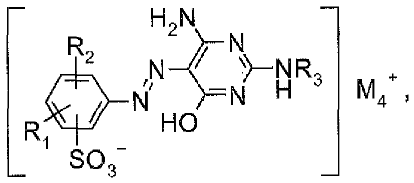 dans laquelle M₄⁺ est Na⁺, Li⁺ ou K⁺ et R₁, R₂ et R₃ sont tels que définis selon la revendication 1.

8. Matière de haut poids moléculaire colorée dans la masse comprenant de 0,01 à 70% en poids, sur la base du poids total de la matière de haut poids moléculaire colorée, d'un composé de formule (I), (II), (III), (IV), (V) ou (VI) selon l'une quelconque des revendications 1 à 6, ou d'un mélange ou d'une solution solide selon la revendication 7, qui est présent(e) sous forme de particules solides reparties dans la matière de haut poids moléculaire ou qui, sous forme solubilisée, pénètre de manière homogène dans la matière de haut poids moléculaire.

9. Matière de haut poids moléculaire colorée dans la masse selon la revendication 8, dans laquelle la matière de haut poids moléculaire est une polyoléfine.

10. Utilisation d'un composé de formule (I), (II), (III), (IV), (V) ou (VI) selon l'une quelconque des revendications 1 à 6, ou d'un mélange ou d'une solution solide selon la revendication 7, pour la coloration dans la masse d'une matière de haut poids moléculaire.
